# EUROPEAN PATENT SPECIFICATION

(11) **EP 1 369 030 B1**
(45) Date of publication and mention of the grant of the patent: **30.03.2005**
(21) Application number: 03076098.7
(22) Date of filing: 15.04.2003
(51) Int. Cl.: A01K 1/12, A01J 5/007, A01J 5/017

(54) **A method and a device for milking animals**
Verfahren und Vorrichtung zum Melken von Tieren
Méthode et dispositif pour traire les animaux

(30) Priority: 06.06.2002 NL 1020788
(43) Date of publication of application: 10.12.2003
(73) Proprietor: Lely Enterprises AG, 6300 ZUG (CH)
(72) Inventor: Theelen, Antoon Peter André, 3142 CM Maassluis (NL)
(74) Representative: Corten, Maurice Jean F.M.

(56) References cited:
- EP-A- 0 091 892
- EP-A- 0 988 784
- US-A- 5 496 802
- US-A- 5 771 837

## Description

The invention relates to a method according to the preamble of claim 1 and to a device as claimed in claim 18.

Such a method and device are known. European patent application EP-A-0988784 discloses a method of and a device for milking animals by means of a milking robot. A cow is allowed to move freely in an area and individually to visit, from said area, the milking stall for being milked. The milking robot is located in the milking stall. Prior to being milked the animal is identified by means of an identification system. The computer of the milking robot decides, on the basis of a milking criterion, whether or not the animal is allowed to be milked. The animal is milked if, since the previous milking, at least a specific number of milkings of other animals has taken place. Said specific number of milkings is a function of parameters that may relate both to the group of animals, such as the total number of milkings per unit of time, and to the individual animal to be milked, such as the individual milking figure. Said individual milking figure comprises the average number of milkings desired per unit of time. Said milking figure may depend on a number of parameters, such as health and lactation stage. In this manner it is achieved that the production and the production capacity of the device are properly attuned to each other.

In the current practice of cattle breeding a good planning of the production of a group of animals is very important. Said production is frequently determined by external factors such as quota regulations. The quota regulations determine that only a particular maximum production, the so-called quota, is allowed to be produced during a fixed period, the so-called quota-year. Both producing less and producing more than a particular planned production may become a very expensive affair because of such regulations. However, the method and device mentioned above do not indicate how to obtain said particular production.

The invention aims at providing a method of the above-mentioned type by means of which a better planning of the production (of a group of animals) is possible.

According to the invention, for this purpose a method of the above-described type is characterized by the features of claim 1. By means of this method the amount of milk or milk component still to be produced by the whole group can be taken into account. This takes place by choosing the milking criterion in such a way that the milking is automatically adapted and that the planned target, i.e. a particular cumulative production, can be attained at any rate partially. The milking criterion includes the condition of a milking-related action and the way in which said milking-related action is performed at milking. A change of the conditions and/or the way in which the action takes place has an immediate effect on the results of the milking process, such as the milk output and the composition of the milk.

In a particular embodiment of the method, the initial point of time is the first quota-related point of time. In this manner the period of the desired production entirely corresponds to the period in which production will take place, so that over the period preceding the initial point of time no artificial calculation of production data is required.

In a further embodiment of the method, the method further comprises the step of determining the momentary point of time, and the step of adapting the milking criterion with the aid of the momentary point of time.

In this way it is possible to take into account how far the momentary point of time of production is away from the second quota-related point of time, usually the end of a quota-year period. If said momentary point of time is relatively far away from the second quota-related point of time, a number of external production conditions, such as the weather, may cause a too great uncertainty in the production, so that a production change caused by the milking criterion will fall within said uncertainty.

In another embodiment according to the invention, the method further comprises the step of determining the time elapsed since the first quota-related point of time, and the step of adapting the milking criterion with the aid of the time elapsed.

It is advantageous if the method further comprises the step of determining the production quotient i.e. the ratio between the cumulative amount and the time elapsed, the step of determining the quota quotient i.e. the ratio between the cumulative amount desired and the difference between the first and the second quota-related point of time, and the step of adapting the milking criterion with the aid of the production quotient and the quota quotient.

By adapting the milking criterion in such a way that the momentary production quotient is equal to the quota quotient, the cumulative production desired will correspond to the cumulative production produced.

In an advantageous embodiment according to the invention, the method further comprises the step of collecting historical production data, and the step of performing a mathematical operation on the historical production data in order to forecast at least a part of the production pattern in the period until the second quota-related point of time, and the step of adapting the milking criterion with the aid of the forecast production pattern.

There are known mathematical operations, such as formulas, that are able to determine the future production on the basis of known production data of an animal and for example the lactation stage of the animal. By performing the method for each animal out of the group of animals, it is possible to forecast the total future production pattern until the second quota-related point of time.

In a further embodiment according to the invention, the method further comprises the step of determining the historical pattern of the production of the group of animals during a period in the past, which period corresponds to the period from the initial point of time to the second quota-related point of time, the step of determining the recent production pattern of the group of animals comprising the production during the period from the initial point of time, and the step of determining the forecast production pattern by comparing the recent pattern with the historical pattern.

Production data from a year ago are nearly always known. If the quota of that year is equal to the desired production and assuming that the production passes through an annual cycle, it is possible to forecast the coming production pattern by extrapolation of the recent pattern with the pattern of a year ago.

In an advantageous embodiment of the method according to the invention, the milking criterion includes that an animal is allowed to be milked. It is known that, if an animal is milked less frequently, it will have a lower total production, both as to the total amount of fat and the total amount of milk. The milking criterion including the number of milkings per day should be decreased if the desired production threatens to be exceeded. If the quota is based on the total fat production, the so-called fat quota, it is advantageous to apply said measure to animals producing milk with a high fat content. If a high protein production is desired, it may be advantageous to adapt the milking criterion in the described manner only with animals having a high fat/protein ratio, so that animals having a relatively high protein production will not be milked less frequently.

In an advantageous embodiment, the method further comprises the step of disconnecting teat cups connected to the udder of the animal, and the milking criterion includes parameters regarding the disconnection. It is known that the milk that is drawn at the end of a milking has a much higher fat content than the milk that has been drawn earlier. If the fat quota threatens to be exceeded, the parameters regarding the disconnection may be chosen in such a way that the teat cups are disconnected earlier. Due to this, the fat milk will remain in the animal and the average fat content of the drawn milk will fall.

In a further embodiment, the method further comprises the step of pre-stimulation, and the milking criterion includes parameters regarding the pre-stimulation.

In a particular embodiment, the method further comprises the step of foremilking the animal, and the milking criterion includes parameters regarding the foremilking. The so-called foremilk, the first part of the drawn milk, has a lower quality and is consequently mostly separated by means of a separate foremilking device. If the quota threatens not to be obtained, it is advantageous to adapt the milking criterion in such a way that a smaller amount of foremilk, or even no foremilk is separated.

In another embodiment according to the invention, the method further comprises the step of separating at least a part of the amount of milk to be drawn in one milking run of the animal, and the milking criterion includes parameters regarding the separation. If the quota threatens to be exceeded, the milking criterion may be adjusted in such a way that milk from certain animals is separated and has not to be included in the total production. This is in particular advantageous with a fat quota if milk from animals producing milk with a fat content higher than the average fat content is separated. In this manner the average fat content of the cumulatively produced milk will fall.

In a particular embodiment according to the invention, the part to be separated concerns the last part of an amount of milk to be drawn in the milking run. By the end of a milking the fat content rises considerably, even to a content of approximately 10%. Therefore, if the fat quota threatens to be exceeded, it is advantageous to separate the last part. Although it is also possible not to draw the last part of the milk, especially with larger amounts this is not beneficial to the udder health.

In an advantageous embodiment of the method, the parameters can be adjusted per udder quarter. The quarters of an udder may differ considerably qua capacity, milk speed, composition of the milk, etc. In particular the front part of the udder (the front quarters) may differ considerably from the rear part (rear quarters). Besides, differences may occur due to the fact that a quarter shows an infection. Therefore, for a good performance of the method, it is necessary to consider each quarter individually.

It is advantageous if the milking-related action comprises the supply of feed and if the milking criterion includes parameters regarding the amount and sort of feed. It is known to control the amount of milk to be produced by an animal and the contents thereof by means of the feeding. By combining the supply of feed with automatically milking an animal, an effective utilisation of the active time of the animal occurs.

It is further advantageous if the milking criterion can individually be adapted per animal. In this manner the method can optimally be adapted per animal.

In a further advantageous embodiment according to the invention, the method comprises: the step of forecasting the effect of applying the invention to the production of the animal on the basis of individual production data of the animal, and the step of comparing the effect with a predetermined desired effect, and the step of applying the invention if the forecast effect is greater than the desired effect. Applying the method may also have undesired effects. It often raises the risk of health problems. In that case a raised health risk and a positive effect on the desired production should be weighed against each other.

A second object of the invention is to provide a device for applying the above-mentioned method.

In a particular embodiment of the device according to the invention there are provided switching means making it possible to apply or not to apply the method. By means of said switching means it is possible at all times to perform in a simple manner the automatic milking in the standard way.

The invention will be explained hereinafter in detail with reference to figures of embodiments.
Figure 1 is a side view of a possible device according to the invention;
Figure 2 is a graph of the pattern of a daily production;
Figure 3 is a graph of the pattern of the cumulative production from point of time T1, on the basis of the daily production of Figure 2.

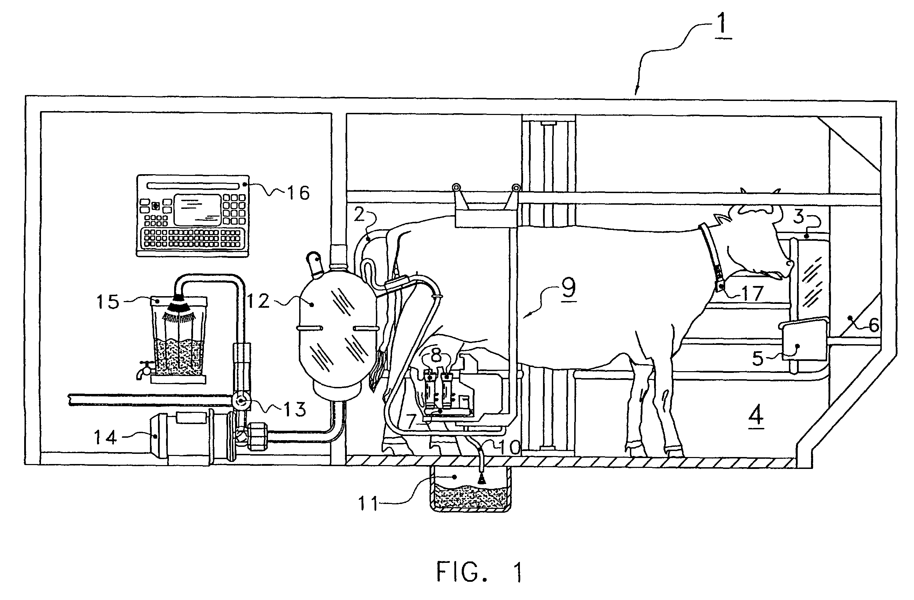

Figure 1 is a side view of a possible device according to the invention in which a cow to be milked is present. The basis of the device is constituted by a frame 1. There are provided an entrance gate 2 and an exit gate 3 for allowing an animal to enter respectively to leave the animal area 4 of the device. There is disposed a feed trough 5 for supplying two sorts of feed, for example a high-energy feed and a high-protein feed. A feed metering device 6 meters the two sorts of feed in the feed trough 5. By supplying the two sorts of feed in a particular ratio it is possible to satisfy the specific need of an animal. The milking device 7 with four teat cups 8 is fastened to a robot arm 9. The robot arm 9 moves the device 7 to under the animal. Connection and disconnection of the teat cups 8 to the teats of the animal takes place automatically. In the milking device 7 there are provided flow sensors for measuring the flow of the milk drawn per udder quarter. The first part of the drawn milk, the foremilk, is discharged via a discharge tube 10 to the sewer 11. For this purpose in each milk line coming from a teat cup there is disposed a sewer valve for guiding the milk optionally to the collecting vessel 12 or to the discharge tube 10. Said valves are controlled on the basis of the values from the flow sensors. The milk from a milking that is not discharged to the sewer is collected in the collecting vessel 12. Via a pump 14 and a three-way valve 13 the milk from the collecting vessel 12 can optionally be guided to a (non-shown) milk-cooling tank or to a separation tank 15. An animal-identification device is disposed for identification of an animal reporting at the device. The animal identification device co-operates with a transponder 17 that an animal wears around its neck. A computer 16 ensures the control of the various components and ensures data-processing.

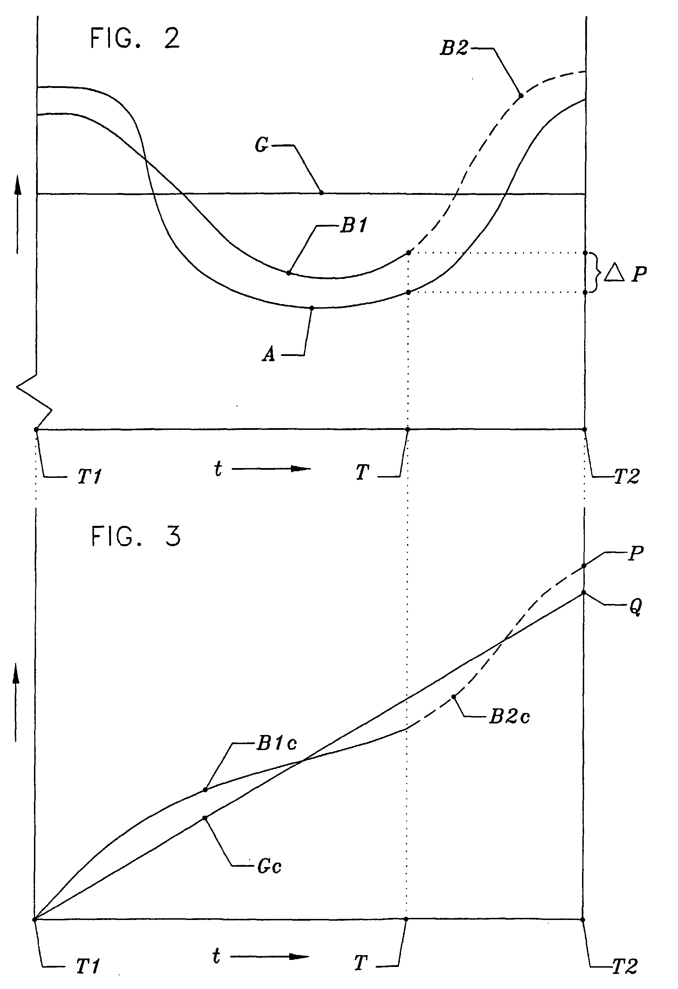

The device operates as follows: First of all the computer 16 determines whether the milking criterion should be adapted. For this purpose, from data stored in the memory of the computer 16, the pattern of the production, in this case expressed in kg fat, of the previous quota-year is determined, indicated by line *A* in Figure 2. Said production is compared with the recent production pattern *B1* until the momentary point of time *T. ΔP* indicates the difference at point of time *T* between line *B1* and *A*. By superposing Δ*P* on the pattern of the previous year *A*, the forecast production pattern *B2* until *T2* is determined. Line *G* indicates the pattern of the constant production by means of which at point of time *T2* the desired production *Q* is attained.

Figure 3 shows the cumulative production pattern *B1c* from the first quota-related point of time *T1.* Said figure can easily be reduced from Figure 2 by summation of the daily productions from point of time *T1.* It is visible that the expected cumulative production at point of time *T2*, indicated by *P*, is higher than the desired cumulative production *Q* at *T2.* In order to make a correction, the milking criterion should be adapted in such a way that the forecast production *P* will come more in the vicinity of *Q* and preferably coincides with *Q*. Line *Gc* indicates the pattern of the cumulative production to obtain the desired production *Q*.

When an animal reports at the device it is recognised by the animal identification device. Subsequently the computer 16 determines whether the period of time since the last milking, the milking interval, has exceeded a minimum value established for the animal, the so-called milking criterion. Because of the imminent exceeding of the fat quota, the computer 16 has set the minimum milking interval higher than the standard value. By means of the following numerical example the determination of the new milking criterion can be elucidated, only said milking criterion being adapted.

Suppose the desired cumulative annual production (Q) is 520,000 kg. At the momentary point of time (T) the cumulative production is 482,400 kg. If there is extrapolated linearly, at an unchanged daily production there will be obtained a forecast annual production (P) of 482,400/48x52=522,600 kg at point of time T2, i.e. an over-production of 0.5%. This corresponds to a desired production decrease in the remaining four weeks of 2600/(4/52x522,600)x100%=6.5%. It is known that, by milking with a milking robot, it is possible to achieve a higher daily production in comparison with conventionally milking two times a day. This is caused by a higher number of milkings per day. Table 1 elucidates the effect of the number of milkings per day and consequently the milking interval (MI) on the daily production relative to milking two times a day.

**table 1**

| milkings per day [-/d] | MI [h] | effect relative to MI=12 [%] |
|---|---|---|
| 2.0 | 12.0 | 0 |
| 2.5 | 9.6 | 4 |
| 3.0 | 8.0 | 8 |
| 3.5 | 6.9 | 12 |

Suppose the average MI amounts to 8.0 h (3.0 milkings per day), then a decrease of 6.5% is obtained by reducing the number of milkings to 2.2, which corresponds to an increase of the MI to 10.9 h. The computer has such a table in its memory and calculates the new desired MI. The minimum MI, i.e. the milking criterion, is equated herewith. In another embodiment, the individual minimum MI is increased by 2.9 h for each animal, so that the differences in MI between the individual animals are maintained.

If the minimum milking interval has been exceeded, the animal is admitted. The metering device 6 meters the desired feed and the robot arm 9 connects the milking device 7. Because of the imminent exceeding less feed is now supplied. As a result thereof the expected future milk production will fall. At the beginning of the milking the sewer valves are orientated in such a way that the foremilk is passed via the discharge tube 10 to the sewer 11. Because of the imminent exceeding this also holds for the last part of the drawn milk. After disconnection of the milking device 7 by the robot arm 9 and disinfection of the teats, the exit gate 3 is opened and the animal is allowed to leave the device. From data in the memory of the computer coming from a previous external milk analysis or coming from the measurement data obtained by means of sensors in the milking device, the fat content of the milk obtained is determined. If the milk from the animal has such a high fat content that a particular value of the milking criterion related thereto is exceeded, the computer 16 may decide to adjust the three-way valve 13 in such a way that it is positioned in the direction of the separation vessel 15. The pump 14 subsequently empties the collecting vessel 12 into the separation vessel 15.

## Claims

1. A method of automatically milking an animal out of a group of animals, which method comprises the following steps:
* the step of establishing a milking criterion including the conditions of a milking-related action and the way in which said milking-related action is performed,
**characterized in that** the method further comprises :
* the step of establishing a desired cumulative amount of milk or milk component (Q) to be produced by the group of animals from a predetermined first quota-related point of time (T1) to a predetermined future second quota-related point of time (T2),
* the step of determining the cumulative amount of milk or milk component (B1c) produced by the group of animals from an initial point of time (T1), and
* the step of adapting the milking criterion with the aid of the cumulative amount of milk or milk component produced (B1c) and with the aid of the amount desired (6C, Q).

2. A method as claimed in claim 1, **characterized in that** the initial point of time is the first quota-related point of time.

3. A method as claimed in claim 1 or 2, **characterized in that** the method further comprises:
* the step of determining the momentary point of time, and
* the step of adapting the milking criterion with the aid of the momentary point of time.

4. A method as claimed in claim 3, **characterized in that** the method further comprises:
* the step of determining the time elapsed since the first quota-related point of time, and
* the step of adapting the milking criterion with the aid of the time elapsed.

5. A method as claimed in claim 4, **characterized in that** the method further comprises:
* the step of determining the production quotient i.e. the ratio between the cumulative amount and the time elapsed,
* the step of determining the quota quotient i.e. the ratio between the cumulative amount desired and the difference between the first and the second quota-related point of time, and
* the step of adapting the milking criterion with the aid of the production quotient and the quota quotient.

6. A method as claimed in any one of the preceding claims, **characterized in that** the method further comprises:
* the step of collecting historical production data, and
* the step of performing a mathematical operation on the historical production data in order to forecast at least a part of the production pattern in the period until the second quota-related point of time, and
* the step of adapting the milking criterion with the aid of the forecast production pattern.

7. A method as claimed in claim 6, **characterized in that** the method further comprises:
* the step of determining the historical pattern of the production of the group of animals during a period in the past, which period corresponds to the period from the initial point of time to the second quota-related point of time,
* the step of determining the recent production pattern of the group of animals comprising the production during the period from the initial point of time, and
* the step of determining the forecast production pattern by comparing the recent pattern with the historical pattern.

8. A method as claimed in any one of the preceding claims, **characterized in that** the milking criterion allows an animal to be milked.

9. A method as claimed in any one of the preceding claims, **characterized in that** the method further comprises the step of disconnecting teat cups connected to the udder of the animal, and **in that** the milking criterion includes parameters regarding the disconnection.

10. A method as claimed in any one of the preceding claims, **characterized in that** the method further comprises the step of foremilking the animal, and **in that** the milking criterion includes parameters regarding the foremilking.

11. A method as claimed in any one of the preceding claims, **characterized in that** the method further comprises the step of pre-stimulation, and **in that** the milking criterion includes parameters regarding the pre-stimulation.

12. A method as claimed in any one of the preceding claims, **characterized in that** the method further comprises the step of separating a part of the amount of milk to be drawn in one milking run of the animal, and **in that** the milking criterion includes parameters regarding the separation.

13. A method as claimed in claim 12, **characterized in that** the part to be separated concerns the last part of an amount of milk to be drawn in the milking run.

14. A method as claimed in any one of claims 9 to 12, **characterized in that** the parameters can be adjusted per udder quarter.

15. A method as claimed in any one of the preceding claims, **characterized in that** the milking-related action comprises the supply of feed, and **in that** the milking criterion includes parameters regarding the amount and sort of feed.

16. A method as claimed in any one of the preceding claims, **characterized in that** the milking criterion can individually be adapted per animal.

17. A method for automatically milking an animal out of a group of animals, **characterized in that** the method comprises:
* the step of forecasting the effect of applying the method as claimed in any one of the preceding claims to the production of the animal on the basis of individual production data of the animal, and
* the step of comparing the effect with a predetermined desired effect, and
* the step of applying the method as claimed in any one of the preceding claims if the forecast effect is greater than the desired effect.

18. A device for applying the method as claimed in any one of the preceding claims.

19. A device as claimed in claim 18, **characterized in that** there are provided switching means making it possible to apply or not to apply said method.

## Patentansprüche

1. Verfahren zum automatischen Melken eines Tieres aus einer Gruppe von Tieren, wobei das Verfahren die folgenden Verfahrensschritte umfaßt:
- den Verfahrensschritt des Festlegens eines Melkkriteriums einschließlich der Bedingungen einer melkspezifischen Handlung und der Art und Weise, in der diese melkspezifische Handlung durchgeführt wird,
**dadurch gekennzeichnet, daß** das Verfahren ferner umfaßt:
- den Verfahrensschritt des Ermittelns einer gewünschten akkumulierten Menge an Milch oder Milchbestandteilen (Q), die von der Gruppe von Tieren zwischen einem vorgegebenen ersten quotenbezogenen Zeitpunkt (T1) und einem vorgegebenen zukünftigen zweiten quotenbezogenen Zeitpunkt (T2) zu produzieren ist,
- den Verfahrensschritt des Ermittelns der akkumulierten Menge an Milch oder Milchbestandteilen (B1c), die von der Gruppe von Tieren seit einem ersten Zeitpunkt (T1) produziert wurde,
- den Verfahrensschritt des Anpassens des Melkkriteriums mit Hilfe der erzeugten akkumulierten Menge an Milch oder Milchbestandteilen (B1c) und mit Hilfe der gewünschten Menge (Gc, Q).

2. Verfahren nach Anspruch 1,
**dadurch gekennzeichnet, daß** der erste Zeitpunkt der erste quotenbezogene Zeitpunkt ist.

3. Verfahren nach Anspruch 1 oder 2,
**dadurch gekennzeichnet, daß** das Verfahren ferner umfaßt:
- den Verfahrensschritt des Ermittelns des gegenwärtigen Zeitpunktes und
- den Verfahrensschritt des Anpassens des Melkkriteriums mit Hilfe des gegenwärtigen Zeitpunktes.

4. Verfahren nach Anspruch 3,
**dadurch gekennzeichnet, daß** das Verfahren ferner umfaßt:
- den Verfahrensschritt des Ermittelns der Zeit, die seit dem ersten quotenbezogenen Zeitpunkt verstrichen ist, und
- den Verfahrensschritt des Anpassens des Melkkriteriums mit Hilfe der verstrichenen Zeit.

5. Verfahren nach Anspruch 4,
**dadurch gekennzeichnet, daß** das Verfahren ferner umfaßt:
den Verfahrensschritt des Ermittelns des Produktionsquotienten, d. h. des Verhältnisses zwischen dem akkumulierten Betrag und der verstrichenen Zeit,
- den Verfahrensschritt des Ermittelns des Quotenquotienten, d. h. des Verhältnisses zwischen der akkumulierten gewünschten Menge und dem Unterschied zwischen dem ersten und dem zweiten quotenbezogenen Zeitpunkt, und
- den Verfahrensschritt des Anpassens des Melkkriteriums mit Hilfe des Produktionsquotienten und des Quotenquotienten.

6. Verfahren nach einem der vorhergehenden Ansprüche,
**dadurch gekennzeichnet, daß** das Verfahren ferner umfaßt:
- den Verfahrensschritt des Sammelns historischer Produktionsdaten und
- den Verfahrensschritt des Durchführens einer mathematischen Operation mit den historischen Produktionsdaten, um zumindest einen Teil des Produktionsmusters in dem Zeitraum bis zum zweiten quotenbezogenen Zeitpunkt vorauszusagen, und
- den Verfahrensschritt des Anpassens des Melkkriteriums mit Hilfe des vorausgesagten Produktionsmusters.

7. Verfahren nach Anspruch 6,
**dadurch gekennzeichnet, daß** das Verfahren ferner umfaßt:
- den Verfahrensschritt des Ermittelns des historischen Musters der Produktion der Gruppe von Tieren während eines Zeitraumes in der Vergangenheit, wobei der Zeitraum dem Zeitraum zwischen dem ersten Zeitpunkt und dem zweiten quotenbezogenen Zeitpunkt entspricht,
- den Verfahrensschritt des Ermittelns des jüngsten Produktionsmusters der Gruppe von Tieren, das die Produktion während des Zeitraumes seit dem ersten Zeitpunkt umfaßt, und
- den Verfahrensschritt des Ermittelns des vorausgesagten Produktionsmusters durch Vergleichen des jüngsten Musters mit dem historischen Muster.

8. Verfahren nach einem der vorhergehenden Ansprüche,
**dadurch gekennzeichnet, daß** das Melkkriterium es einem Tier ermöglicht, gemolken zu werden.

9. Verfahren nach einem der vorhergehenden Ansprüche,
**dadurch gekennzeichnet, daß** das Verfahren ferner den Verfahrensschritt des Abnehmens von an das Euter des Tieres angeschlossenen Zitzenbechern umfaßt, und daß das Melkkriterium Parameter bezüglich des Abnehmens enthält.

10. Verfahren nach einem der vorhergehenden Ansprüche,
**dadurch gekennzeichnet, daß** das Verfahren ferner den Verfahrensschritt des Vormelkens des Tieres umfaßt, und daß das Melkkriterium Parameter bezüglich des Vormelkens enthält.

11. Verfahren nach einem der vorhergehenden Ansprüche,
**dadurch gekennzeichnet, daß** das Verfahren ferner den Verfahrensschritt der Vorstimulierung umfaßt, und daß das Melkkriterium Parameter bezüglich der Vorstimulierung enthält.

12. Verfahren nach einem der vorhergehenden Ansprüche,
**dadurch gekennzeichnet, daß** das Verfahren ferner den Verfahrensschritt des Absonderns eines Teiles der in einem Melkvorgang des Tieres zu erzielenden Milchmenge umfaßt, und daß das Melkkriterium Parameter bezüglich des Absonderns enthält.

13. Verfahren nach Anspruch 12,
**dadurch gekennzeichnet, daß** der abzusondernde Teil den letzten Teil einer bei dem Melkvorgang zu erzielenden Milchmenge betrifft.

14. Verfahren nach einem der Ansprüche 9 bis 12,
**dadurch gekennzeichnet, daß** die Parameter für jedes Euterviertel einstellbar sind.

15. Verfahren nach einem der vorhergehenden Ansprüche,
**dadurch gekennzeichnet, daß** die melkspezifische Handlung die Zufuhr von Futter umfaßt, und daß das Melkkriterium Parameter bezüglich der Menge und Art des Futters enthält.

16. Verfahren nach einem der vorhergehenden Ansprüche,
**dadurch gekennzeichnet, daß** das Melkkriterium für jedes Tier einzeln angepaßt werden kann.

17. Verfahren zum automatischen Melken eines Tieres aus einer Gruppe von Tieren,
**dadurch gekennzeichnet, daß** das Verfahren umfaßt:
- den Verfahrensschritt des Voraussagens der Wirkung der Durchführung des Verfahrens nach einem der vorhergehenden Ansprüche auf die Produktion des Tieres auf der Basis individueller Produktionsdaten des Tieres und
- den Verfahrensschritt des Vergleichens der Wirkung mit einer vorgegebenen gewünschten Wirkung und
- den Verfahrensschritt des Durchführens des Verfahrens nach einem der vorhergehenden Ansprüche, wenn die vorausgesagte Wirkung größer ist als die gewünschte Wirkung.

18. Vorrichtung zur Durchführung des Verfahrens nach einem der vorhergehenden Ansprüche.

19. Vorrichtung nach Anspruch 18,
**dadurch gekennzeichnet, daß** eine Schaltvorrichtung vorgesehen ist, die es ermöglicht, das Verfahren durchzuführen oder nicht durchzuführen.

## Revendications

1. Procédé de traite automatique d'un animal parmi un groupe d'animaux, lequel procédé comprend les étapes suivantes :
l'étape consistant à établir un critère de traite, comprenant les conditions d'une action connexe à la traite et la manière dont ladite action connexe à la traite est réalisée,
**caractérisé en ce que** le procédé comprend en outre :
l'étape consistant à établir une quantité cumulative souhaitée de lait ou constituant de lait (Q) destiné à être produit par le groupe d'animaux à partir d'un premier moment prédéterminé (T1) connexe au quota jusqu'à un second moment futur prédéterminé (T2) connexe au quota,
l'étape consistant à déterminer la quantité cumulative de lait ou constituant de lait (BAL) produit par le groupe d'animaux à partir d'un moment initial (T1), et
l'étape consistant à adapter le critère de traite à l'aide de la quantité cumulative de lait ou constituant de lait produit (BAL) et à l'aide de la quantité souhaitée (GC, Q).

2. Procédé selon la revendication 1, **caractérisé en ce que** le moment initial est le premier moment connexe au quota.

3. Procédé selon la revendication 1 ou 2, **caractérisé en ce que** le procédé comprend en outre :
l'étape consistant à déterminer le moment temporaire, et
l'étape consistant à adapter le critère de traite à l'aide du moment temporaire.

4. Procédé selon la revendication 3, **caractérisé en ce que** le procédé comprend en outre :
l'étape consistant à déterminer le temps écoulé depuis le premier moment connexe au quota, et
l'étape consistant à adapter le critère de traite à l'aide du temps écoulé.

5. Procédé selon la revendication 4, **caractérisé en ce que** le procédé comprend en outre :
l'étape consistant à déterminer le quotient de production, c'est-à-dire le rapport entre la quantité cumulative et le temps écoulé,
l'étape consistant à déterminer le quotient de quota, c'est-à-dire le rapport entre la quantité cumulative souhaitée et la différence entre le premier et le second moments connexes au quota, et
l'étape consistant à adapter le critère de traite à l'aide du quotient de production et le quotient de quota.

6. Procédé selon l'une quelconque des revendications précédentes, **caractérisé en ce que** le procédé comprend en outre :
l'étape consistant à recueillir des données de production historiques, et
l'étape consistant à réaliser une opération mathématique sur les données de production historiques afin de prévoir au moins une partie de la tendance de production durant la période jusqu'au second moment connexe au quota, et
l'étape consistant à adapter le critère de traite à l'aide de la tendance de production prévue.

7. Procédé selon la revendication 6, **caractérisé en ce que** le procédé comprend en outre :
l'étape consistant à déterminer la tendance historique de la production du groupe d'animaux durant une période dans le passé, laquelle période correspond à la période du moment initial au second moment connexe au quota,
l'étape consistant à déterminer la récente tendance de production du groupe d'animaux comprenant la production durant la période à partir du moment initial, et
l'étape consistant à déterminer la tendance de production prévue en comparant la tendance récente avec la tendance historique.

8. Procédé selon l'une quelconque des revendications précédentes, **caractérisé en ce que** le critère de traite permet à un animal d'être trait.

9. Procédé selon l'une quelconque des revendications précédentes, **caractérisé en ce que** le procédé comprend en outre l'étape consistant à disjoindre les gobelets trayeurs reliés au pis de l'animal, et **en ce que** le critère de traite comprend des paramètres concernant la disjonction.

10. Procédé selon l'une quelconque des revendications précédentes, **caractérisé en ce que** le procédé comprend en outre l'étape consistant à réaliser la traite du premier lait de l'animal, et **en ce que** le critère de traite comprend des paramètres concernant la traite du premier lait.

11. Procédé selon l'une quelconque des revendications précédentes, **caractérisé en ce que** le procédé comprend en outre l'étape de pré-stimulation, et **en ce que** le critère de traite comprend des paramètres concernant la pré-stimulation.

12. Procédé selon l'une quelconque des revendications précédentes, **caractérisé en ce que** le procédé comprend en outre l'étape consistant à séparer une partie de la quantité de lait destiné à être trait dans un cycle de traite de l'animal, et **en ce que** le critère de traite comprend des paramètres concernant la séparation.

13. Procédé selon la revendication 12, **caractérisée en ce que** la partie destinée à être séparée concerne la dernière partie d'une quantité de lait destiné à être trait dans le cycle de traite.

14. Procédé selon l'une quelconque des revendications 9 à 12, **caractérisé en ce que** les paramètres peuvent être ajustés pour chaque quartier de pis.

15. Procédé selon l'une quelconque des revendications précédentes, **caractérisé en ce que** l'action connexe à la traite comprend l'alimentation de fourrage, et **en ce que** le critère de traite comprend des paramètres concernant la quantité et le type de fourrage.

16. Procédé selon l'une quelconque des revendications précédentes, **caractérisé en ce que** le critère de traite peut être adapté individuellement pour chaque animal.

17. Procédé pour la traite automatique d'un animal parmi un groupe d'animaux, **caractérisé en ce que** le procédé comprend :
l'étape consistant à prévoir l'effet de l'application du procédé selon l'une quelconque des revendications précédentes à la production de l'animal sur la base de données de production individuelles de l'animal, et
l'étape consistant à comparer l'effet avec un effet souhaité prédéterminé, et
l'étape consistant à appliquer le procédé selon l'une quelconque des revendications précédentes si l'effet prévu est supérieur à l'effet souhaité.

18. Dispositif pour l'application du procédé selon l'une quelconque des revendications précédentes.

19. Dispositif selon la revendication 18, **caractérisé en ce que** des moyens de commutation sont prévus permettant l'application ou la non-application dudit procédé.
